# EUROPEAN PATENT APPLICATION

(11) **EP 3 054 326 A1**
(43) Date of publication of application: **10.08.2016**
(21) Application number: 14850712.2
(22) Date of filing: 02.10.2014
(51) Int. Cl.: G02B 5/26, G02B 5/08, G02B 5/30, G09F 9/00

(54) **HALF MIRROR FOR DISPLAYING PROJECTED IMAGE, METHOD FOR PRODUCING SAME, AND PROJECTED IMAGE DISPLAY SYSTEM**

(30) Priority: 03.10.2013 JP 2013207939
(71) Applicant: Fujifilm Corporation, Minato-ku Tokyo 106-8620 (JP)
(72) Inventor: ICHIHASHI Mitsuyoshi, Ashigarakami-gun Kanagawa 258-8577 (JP); SAIKI Yuki, Ashigarakami-gun Kanagawa 258-8577 (JP); TAGUCHI Takao, Ashigarakami-gun Kanagawa 258-8577 (JP); KATOH Shunya, Ashigarakami-gun Kanagawa 258-8577 (JP)
(74) Representative: Hoffmann Eitle
(86) International application number: PCT/JP2014/076402
(87) International publication number: WO 2015/050203

(57) **Abstract**

Provided are a half mirror for displaying a projected image having visible light transmittance including a layer formed by immobilizing a cholesteric liquid crystalline phase (for example, three or more layers formed by immobilizing a cholesteric liquid crystalline phase which exhibit different center wavelengths of selective reflection), in which in a surface of the layer formed by immobilizing the cholesteric liquid crystalline phase on a projected image display side which is closest to the projected image display side, directors of cholesteric liquid crystal molecules forming a cholesteric liquid crystalline phase are even; a projected image display system including the half mirror for displaying a projected image and a projector; and a method for producing the half mirror for displaying a projected image. The half mirror for displaying a projected image of the present invention is useful as a combiner of a head up display or the like.

## Description

### BACKGROUND OF THE INVENTION

### 1. Field of the Invention

The present invention relates to a half mirror for displaying a projected image. More specifically, the present invention relates to a half mirror for displaying a projected image which is able to be used as a combiner of a head up display or a head mount display, and a projected image display system including the half mirror for displaying a projected image. In addition, the present invention relates to a method for producing the half mirror for displaying a projected image.

### 2. Description of the Related Art

A half mirror for displaying a projected image which is able to simultaneously display a video projected by a projector and front scenery is able to be used as a combiner or the like of a head up display, a head mount display, and the like. From the related art, glass, holograms, and the like which are subjected to metal compound coating have been used as a half mirror for a head up display (for example, JP1997-258020A (JP-H09-258020A) and JP1999-52283A (JP-H11-52283A)).

### SUMMARY OF THE INVENTION

The half mirror for displaying a projected image has been constantly required to have higher light transmittance and higher projection light reflectivity. In an onboard head up display and the like, a half mirror which is able to provide a projected image having more excellent visibility along with a peripheral image has been required from the viewpoint of safety. In addition, in order to spread the head up display, the head mount display, and the like, a half mirror which is able to be manufactured at low cost is also required. Further, in the combiner of the related art, a problem such as blurring of double images derived from reflection on a glass plate which is subjected to metal compound coating or a video derived from optical properties of a hologram itself is essential, and the problem has been constantly required to be solved.

An object of the present invention is to provide a novel half mirror for displaying a projected image according to the requirement described above.

In order to attain the object described above, the present inventors have conducted intensive studies and have found that it is possible to prepare a half mirror at low cost by using a cholesteric liquid crystal which has been known as having circularly polarized light selective reflection properties from the related art and to obtain high light transmittance and high projection light reflectivity. Therefore, the present inventors have further conducted studies and have found a novel problem that in the half mirror using the cholesteric liquid crystal, brightness and darkness or color unevenness (polarization dependency of reflectivity) occurs in a case where projection light includes polarized light or is observed by polarized sunglasses. In order to solve the novel problem, the present inventors have further conducted studies and have completed the present invention.

That is, the present invention provides [1] to [18] described below.
[1] A half mirror for displaying a projected image having visible light transmittance, including a layer formed by immobilizing a cholesteric liquid crystalline phase, in which in a surface of the layer formed by immobilizing the cholesteric liquid crystalline phase on a projected image display side which is closest to the projected image display side, directors of liquid crystal molecules forming a cholesteric liquid crystalline phase are even.
[2] The half mirror for displaying a projected image according to [1], in which the half mirror for displaying a projected image includes three or more layers formed by immobilizing a cholesteric liquid crystalline phase, and the three or more layers formed by immobilizing the cholesteric liquid crystalline phase exhibit different center wavelengths of selective reflection.
[3] The half mirror for displaying a projected image according to [2], in which directors of liquid crystal molecules forming a cholesteric liquid crystalline phase of both surfaces of each of the three or more layers formed by immobilizing the cholesteric liquid crystalline phase are even.
[4] The half mirror for displaying a projected image according to [2] or [3], in which the three or more layers formed by immobilizing the cholesteric liquid crystalline phase are obtained by repeatedly forming another layer formed by immobilizing a cholesteric liquid crystalline phase directly on a surface of a layer formed by immobilizing a cholesteric liquid crystalline phase which is prepared in advance, and other layers are not included between any layers of the three or more layers formed by immobilizing the cholesteric liquid crystalline phase.
[5] The half mirror for displaying a projected image according to any one of [1] to [4], in which the half mirror for displaying a projected image includes a layer formed by immobilizing a cholesteric liquid crystalline phase which has a center wavelength of apparent selective reflection with respect to red light, a layer formed by immobilizing a cholesteric liquid crystalline phase which has a center wavelength of apparent selective reflection with respect to green light, and a layer formed by immobilizing a cholesteric liquid crystalline phase which has a center wavelength of apparent selective reflection with respect to blue light.
[6] The half mirror for displaying a projected image according to any one of [1] to [5], in which the half mirror for displaying a projected image includes an antireflection layer, and the antireflection layer is on an outermost surface on a projected image display side.
[7] The half mirror for displaying a projected image according to [1] to [6], in which the half mirror for displaying a projected image includes a substrate.
[8] The half mirror for displaying a projected image according to any one of [1] to [7], in which the half mirror for displaying a projected image includes an antireflection layer 1, the layer formed by immobilizing the cholesteric liquid crystalline phase, and the substrate in this order.
[9] The half mirror for displaying a projected image according to [8], in which the half mirror for displaying a projected image includes the antireflection layer 1, the layer formed by immobilizing the cholesteric liquid crystalline phase, the substrate, and an antireflection layer 2 in this order.
[10] The half mirror for displaying a projected image according to [7] or [8], in which the substrate is a substrate having low birefringence, and the antireflection layer is not included on a side of the layer formed by immobilizing the cholesteric liquid crystalline phase opposite to the substrate.
[11] The half mirror for displaying a projected image according to [10], in which the substrate is glass or an acrylic resin.
[12] The half mirror for displaying a projected image according to any one of [1] to [7], in which the half mirror for displaying a projected image includes an antireflection layer 1, the substrate, and the layer formed by immobilizing the cholesteric liquid crystalline phase in this order.
[13] The half mirror for displaying a projected image according to any one of [1] to [12], in which the half mirror for displaying a projected image is used as a combiner of a head up display.
[14] A projected image display system including a projector, and the half mirror for displaying a projected image according to any one of [1] to [13], in which a light emission wavelength of a light source of the projector is in a selective reflection band of the layer formed by immobilizing the cholesteric liquid crystalline phase.
[15] A projected image display system including a projector, and the half mirror for displaying a projected image according to any one of [8] to [12], in which a light emission wavelength of a light source of the projector is in a selective reflection band of the layer formed by immobilizing the cholesteric liquid crystalline phase, and the projector, the antireflection layer 1, and the layer formed by immobilizing the cholesteric liquid crystalline phase are arranged in this order.
[16] The projected image display system according to [14] or [15], in which the projected image display system is used as a head up display.
[17] A method for producing a half mirror for displaying a projected image having visible light transmittance which includes a layer formed by immobilizing a cholesteric liquid crystalline phase, including (1) applying a liquid crystal composition containing a polymerizable liquid crystal compound onto a surface of a temporary support which has been subjected to rubbing or a surface of an alignment layer disposed on the temporary support; (2) forming a cholesteric liquid crystalline phase by aligning the polymerizable liquid crystal compound and forming a layer formed by immobilizing a cholesteric liquid crystalline phase from the liquid crystal composition by immobilizing the alignment; (3) peeling off the temporary support; and (4) allowing the layer formed by immobilizing the cholesteric liquid crystalline phase to adhere to a substrate such that a peeling surface which is obtained after the peeling becomes a projected image display side.
[18] A method for producing a half mirror for displaying a projected image having visible light transmittance which includes a layer formed by immobilizing a cholesteric liquid crystalline phase and an antireflection layer on an outermost surface on a projected image display side, including (1) applying a liquid crystal composition containing a polymerizable liquid crystal compound onto a surface of a temporary support which has been subjected to rubbing or a surface of an alignment layer disposed on the temporary support; (2) forming a cholesteric liquid crystalline phase by aligning the polymerizable liquid crystal compound and forming a layer formed by immobilizing a cholesteric liquid crystalline phase from the liquid crystal composition by immobilizing the alignment; (3) peeling off the temporary support; and (4) allowing a peeling surface which is obtained after the peeling to adhere to the antireflection layer.

According to the present invention, a novel half mirror for displaying a projected image is provided. The half mirror for displaying a projected image of the present invention is useful as a combiner of a head up display or the like. The half mirror for displaying a projected image of the present invention is manufactured at low cost compared to a half mirror which is subjected to metal compound coating or a half mirror of a hologram, and has high light transmittance and high projection light reflectivity. In addition, a problem of brightness and darkness or color unevenness rarely occurs even in a case where projection light includes polarized light or is observed by polarized sunglasses. Further, an advantage in that a problem such as double images does not occur in a case of being combined with a substrate having low birefringence.

### BRIEF DESCRIPTION OF THE DRAWINGS

Fig. 1 is a diagram illustrating the arrangement of a light source, a sample, and a camera (an observation position) at the time of evaluating reflection unevenness in-plane evenness in an example.
Fig. 2 is a picture illustrating in-plane evenness of reflection light of Example 1 (a picture 1) and Comparative Example 1 (a picture 2).

### DESCRIPTION OF THE PREFERRED EMBODIMENTS

Hereinafter, the present invention will be described in detail.

Furthermore, herein, "to" is used as indication including numerical values before and after "to" as the lower limit value and the upper limit value.

Herein, an angle (for example an angle such as "90°") and a relationship thereof (for example, "perpendicular", "horizontal", and the like) include an error range which is allowed in the technical field of the present invention. For example, the angle indicates that the angle is in a range of less than an exact angle ±10°, and an error from the exact angle is preferably less than or equal to 5°, and is more preferably less than or equal to 3°.

Herein, "selective" applied to circular polarization indicates that the light amount of one of a right circular polarization component and a left circular polarization component is greater than that of the other circular polarization component. Specifically, "selective" indicates that the degree of circular polarization of light is preferably greater than or equal to 0.3, is more preferably greater than or equal to 0.6, and is even more preferably greater than or equal to 0.8. Substantially, it is preferable that the degree of circular polarization of light is 1.0. Here, the degree of circular polarization is a value denoted by |I_{R} - I_{L}| / (I_{R} + I_{L}) at the time of setting the intensity of the right circular polarization component of the light to I_{R} and the intensity of the left circular polarization component of the light to I_{L}. Herein, the degree of circular polarization is used in order to indicate a ratio of the circular polarization components of light.

Herein, "sense" applied to circular polarization indicates whether the circular polarization is right circular polarization or left circular polarization. In the sense of the circular polarization, a case where a distal end of an electric field vector is rotated in a clockwise direction according to an increase in time in a case of watching the distal end such that light progresses towards the front is defined as the right circular polarization, and a case where the distal end is rotated in a counterclockwise direction is defined as the left circular polarization.

Herein, the term of "sense" may be used as a spiral twisted direction of a cholesteric liquid crystal. In selective reflection of a cholesteric liquid crystal, in a case where the spiral twisted direction (sense) of the cholesteric liquid crystal is right, right circularly polarized light is reflected and left circularly polarized light is transmitted, and in a case where the sense is left, left circularly polarized light is reflected and right circularly polarized light is transmitted.

Herein, "light" indicates visible light (natural light), unless otherwise particularly stated. A visible light ray is light having a wavelength visually observed among electromagnetic waves, and in general, is light in a wavelength range of 380 nm to 780 nm.

Herein, measurement of light intensity which is necessary in association with the calculation of light transmittance, for example, may be performed by a general visible spectrometer using air as a reference.

Herein, at the time of being simply referred to as "reflection light" or "transmission light", the reflection light or the transmission light is used as an indication including scattering light and diffraction light.

Furthermore, a polarization state of each wavelength of light is able to be measured by using a spectral emission luminance meter on which a circularly polarizing plate is mounted or a spectrometer. In this case, the intensity of light measured through a left circularly polarizing plate corresponds to I_{R}, and the intensity of light measured through a right circularly polarizing plate corresponds to I_{L}. In addition, a general light source such as an incandescent bulb, a mercury lamp, a fluorescent lamp, and an LED emits approximately natural light, and properties of producing polarized light of a measurement target or the like such as a filter mounted thereon, for example, are able to be measured by using a polarization retardation analysis device AxoScan or the like manufactured by Axometrics, Inc.

In addition, the measurement is able to be performed by attaching the measurement target to an illuminometer or an optical spectrometer. A right circular polarization amount is measured by attaching a right circular polarization transmission plate, and a left circular polarization amount is measured by attaching a left circular polarization transmission plate, and thus, a ratio is able to be measured.

### (Optical Properties of Half Mirror for Displaying Projected Image)

Herein, a half mirror for displaying a projected image indicates an optical member which is able to visibly display an image projected from a projector or the like and to simultaneously observe information or scenery on an opposite surface side at the time of observing the half mirror for displaying a projected image from the same surface side on which the image is displayed. That is, the half mirror for displaying a projected image has a function as an optical path combiner which displays external light and video light in a superposition.

The half mirror for displaying a projected image may have a function as a half mirror with respect to at least the projected light, and for example, it is not necessary that the half mirror for displaying a projected image has a function as a half mirror with respect to light in the entire visible light range. In addition, the half mirror for displaying a projected image may have a function as the optical path combiner described above with respect to the entire incidence angle, may have the function described above with respect to light having at least a part of the incidence angle, and for example, may include only a range of a specific incidence angle of less than or equal to 5 degrees, less than or equal to 10 degrees, less than or equal to 15 degrees, less than or equal to 20 degrees, less than or equal to 30 degrees, less than or equal to 40 degrees, and the like at the time of setting a normal direction of the half mirror for displaying a projected image to 0 degrees.

On the other hand, the half mirror for displaying a projected image has visible light transmittance in order to enable the information or the scenery on the opposite surface side to be observed. Having visible light transmittance indicates that the half mirror for displaying a projected image has light transmittance which is greater than or equal to 80%, is preferably greater than or equal to 90%, is more preferably 100%, is greater than or equal to 40%, is preferably greater than or equal to 50%, is more preferably greater than or equal to 60%, and is even more preferably greater than or equal to 70%, with respect to a wavelength range of visible light.

Optical properties of the half mirror for displaying a projected image of the present invention with respect to ultraviolet light or infrared light other than the visible light range are not particularly limited, and may include transmission, reflection, or absorption. In order to prevent deterioration of the half mirror for displaying a projected image and in order to perform heat insulation, eye protection for a user of the half mirror for displaying a projected image, or the like, it is preferable to include an ultraviolet light reflection layer or an infrared light reflection layer.

### (Configuration of Half Mirror for Displaying Projected Image)

The half mirror for displaying a projected image of the present invention includes at least one layer formed by immobilizing a cholesteric liquid crystalline phase, and in a surface of the layer formed by immobilizing the cholesteric liquid crystalline phase on a projected image display side which is closest to the projected image display side, directors of liquid crystal molecules forming a cholesteric liquid crystalline phase are even. Herein, the layer formed by immobilizing the cholesteric liquid crystalline phase may be referred to as a cholesteric liquid crystal layer or a liquid crystal layer.

The half mirror for displaying a projected image of the present invention may include a layer such as an antireflection layer, an alignment layer, a support, an adhesive layer, and a substrate described below, in addition to the cholesteric liquid crystal layer. On the other hand, it is preferable that a light shielding layer which reflects or absorbs light is not included. This is because high transparency (light transmittance of greater than or equal to 60%, and preferably, light transmittance of greater than or equal to 70%) for viewing the surrounding scenery or the information on the opposite side of the half mirror is able to be obtained.

The half mirror for displaying a projected image may be a thin film in the shape of a film, a sheet, a plate, or the like. The half mirror for displaying a projected image may be in the shape of a flat surface which does not include a curved surface, may include a curved surface, or may have a concave or convex shape as a whole and display the projected image in an enlarged or reduced size. In addition, the half mirror for displaying a projected image may adhere to other members and have the shapes described above, or may be in the shape of a roll or the like as a thin film before the adhesion.

### (Layer Formed by Immobilizing Cholesteric Liquid Crystalline Phase: Cholesteric Liquid Crystal Layer)

The cholesteric liquid crystal layer functions as a circular polarization selective reflection layer which selectively reflects any one sense of circularly polarized light of right circularly polarized light and left circularly polarized light and transmits the other sense of circularly polarized light in a selective reflection band (a selective reflection wavelength range). That is, the sense of the circularly polarized light to be reflected is left in a case where the sense of the circularly polarized light to be transmitted is right, and the sense of the circularly polarized light to be reflected is right in a case where the sense of the circularly polarized light to be transmitted is left. In a wavelength exhibiting selective reflection of projection light, it is possible to form a projected image by reflecting any one sense of the circularly polarized light according to the function of the cholesteric liquid crystal layer.

A film formed of a composition containing a polymerizable liquid crystal compound has been generally known as a film exhibiting circularly polarized light selective reflection properties from the related art, and the layer formed by immobilizing the cholesteric liquid crystalline phase (the cholesteric liquid crystal layer) can be referred to that in the related art.

The cholesteric liquid crystal layer may be a layer in which alignment of a liquid crystal compound formed of a cholesteric liquid crystalline phase is retained, and typically may be a layer in which the polymerizable liquid crystal compound is set to be in an alignment state of the cholesteric liquid crystalline phase and is subjected to ultraviolet ray irradiation, heating, or the like by polymerization and curing, and thus, a layer which does not have fluidity is formed and is simultaneously changed to a state where a change does not occurs in an alignment mode due to an external field or an external force. Furthermore, in the cholesteric liquid crystal layer, it is sufficient that optical properties of the cholesteric liquid crystalline phase are retained in the layer, and the liquid crystal compound of the layer may no longer exhibit liquid crystal properties. For example, the polymerizable liquid crystal compound may have a high molecular weight by a curing reaction, and may no longer have liquid crystal properties.

The cholesteric liquid crystal layer exhibits circular polarization reflection derived from a spiral structure of the cholesteric liquid crystal. Herein, the circular polarization reflection indicates selective reflection.

A center wavelength λ, of the selective reflection depends on a pitch length P (= a cycle of a spiral) of the spiral structure in a cholesteric phase, and depends on a relationship of λ, = n x P with an average refractive index n of the cholesteric liquid crystal layer. Furthermore, herein, the center wavelength λ of the selective reflection of the cholesteric liquid crystal layer indicates a wavelength in a gravity center position of a reflection peak of a circular polarization reflection spectrum measured from the normal direction of the cholesteric liquid crystal layer. As evident from the above description, it is possible to adjust the center wavelength of the selective reflection by adjusting the pitch length of the spiral structure. That is, for example, in order to selectively reflect any one of the right circularly polarized light and the left circularly polarized light with respect to blue light by adjusting an n value and a P value, the center wavelength λ is able to be adjusted, and the center wavelength of apparent selective reflection is able to be in a wavelength range of 450 nm to 495 nm. Furthermore, the center wavelength of the apparent selective reflection indicates a wavelength in a gravity center position of a reflection peak of a circular polarization reflection spectrum of the cholesteric liquid crystal layer measured from a practical observation direction (at the time of being used as the half mirror for displaying a projected image). For example, in a case where oblique light is incident on the cholesteric liquid crystal layer, the center wavelength of the selective reflection is shifted to a short wavelength side from the center wavelength at the time of performing measurement by allowing light to be incident from the normal direction of the cholesteric liquid crystal layer.

The pitch length of the cholesteric liquid crystalline phase depends on the type of chiral agent used along with the polymerizable liquid crystal compound or the addition concentration thereof, and thus, a desired pitch length is able to be obtained by adjusting the type of chiral agent or the addition concentration thereof. Furthermore, methods disclosed in "Introduction to Liquid Crystal Chemical Test", Page 46, edited by Japan Liquid Crystal Society, published by Sigma Publications, 2007, and "Liquid Crystal Handbook", Page 196, Liquid Crystal Handbook Editing Committee Maruzen are able to be used as a measurement method of the sense or the pitch of the spiral.

A cholesteric liquid crystal layer of which the sense of the spiral is either right or left is used as each of the cholesteric liquid crystal layers. The sense of the reflection circular polarization of the cholesteric liquid crystal layer is coincident with the sense of the spiral.

In a half value width Δλ (nm) of the selective reflection band exhibiting the circular polarization selective reflection, Δλ depends on birefringence Δn of the liquid crystal compound and the pitch length P, and depends on a relationship of Δλ = Δn x P. For this reason, the width of the selective reflection band is able to be controlled by adjusting Δn. Δn is able to be adjusted by adjusting the type of polymerizable liquid crystal compound or the mixing ratio thereof or by controlling a temperature at the time of immobilizing the alignment.

In order to form one type of cholesteric liquid crystal layer having the same center wavelength of the selective reflection, a plurality of cholesteric liquid crystal layers having the same cycle P and the same sense of the spiral may be laminated. By laminating the cholesteric liquid crystal layers having the same cycle P and the same sense of the spiral, it is possible to increase circular polarization selectivity in a specific wavelength.

The width of the selective reflection band, for example, is approximately 15 nm to 100 nm in a visible light range, in general, in one type of material. In order to increase the width of the selective reflection band, two or more cholesteric liquid crystal layers having different center wavelengths of the reflection light in which the cycle P is changed may be laminated. At this time, it is preferable that cholesteric liquid crystal layers having the same sense of the spiral are laminated. In addition, in one cholesteric liquid crystal layer, it is possible to increase the width of the selective reflection band by gradually changing the cycle P with respect to a film thickness direction. The width of the selective reflection band is not particularly limited, and may be a wavelength width of 1 nm, 10 nm, 50 nm, 100 nm, 150 nm, 200 nm, or the like. It is preferable that the width is approximately less than or equal to 100 nm.

It is preferable that the half mirror for displaying a projected image of the present invention has the center wavelength of the apparent selective reflection with respect to each of red light, green light, and blue light. This is because a full color projected image is able to be displayed. Specifically, it is preferable that the half mirror for displaying a projected image of the present invention is in a range of each of 750 nm to 620 nm, 630 nm to 500 nm, and 530 nm to 420 nm, and has three different center wavelengths of the selective reflection (for example, different by 50 nm or more). In consideration of a use mode in which oblique light is incident on the cholesteric liquid crystal layer, it is preferable that the half mirror for displaying a projected image of the present invention has a center wavelength of selective reflection in a range of 490 nm to 570 nm, a center wavelength of selective reflection in a range of 580 nm to 680 nm, and a center wavelength of selective reflection in a range of 700 nm to 830 nm as a center wavelength at the time of performing measurement from the normal direction. Such properties are able to be attained by a configuration including three or more types of cholesteric liquid crystal layers. Specifically, a configuration may include three or more types of cholesteric liquid crystal layers which have different cycles P, and thus, have different center wavelengths of the selective reflection. It is preferable that the half mirror for displaying a projected image of the present invention includes a cholesteric liquid crystal layer selectively reflecting either the right circularly polarized light or the left circularly polarized light with respect to red light (a cholesteric liquid crystal layer having a center wavelength of apparent selective reflection in 750 nm to 620 nm), a cholesteric liquid crystal layer selectively reflecting either the right circularly polarized light or the left circularly polarized light with respect to green light (a cholesteric liquid crystal layer having a center wavelength of apparent selective reflection in 630 nm to 500 nm), and a cholesteric liquid crystal layer selectively reflecting either the right circularly polarized light or the left circularly polarized light with respect to blue light (a cholesteric liquid crystal layer having a center wavelength of apparent selective reflection in 530 nm to 420 nm).

The center wavelength of the selective reflection of the cholesteric liquid crystal layer to be used is adjusted according to a light emission wavelength range of a light source to be used in projection and a use mode of the half mirror for displaying a projected image, and thus, a vivid projected image is able to be displayed with excellent light utilization efficiency. In particular, each center wavelength of selective reflection of a plurality of cholesteric liquid crystal layers is adjusted according to a light emission wavelength range or the like of a light source to be used in projection, and thus, a vivid color projected image is able to be displayed with excellent light utilization efficiency. In particular, examples of the use mode of the half mirror for displaying a projected image include an incidence angle of a projection light onto the half mirror for displaying a projected image surface, a projected image observation direction of the half mirror for displaying a projected image surface, and the like.

The senses of the spirals of the cholesteric liquid crystal layers having different center wavelengths of the selective reflection may be entirely identical to each other, or may be different from each other, but it is preferable that the senses of the spirals of the cholesteric liquid crystal layers are entirely identical to each other.

When the plurality of cholesteric liquid crystal layers are laminated, cholesteric liquid crystal layers separately prepared may be laminated by using an adhesive agent or the like, or a liquid crystal composition containing a polymerizable liquid crystal compound or the like may be directly applied onto the surface of a cholesteric liquid crystal layer which is formed in advance by the following method, and an alignment step and an immobilization step may be repeated, and the latter is preferable. This is because an alignment azimuth of liquid crystal molecules on an air boundary side of the cholesteric liquid crystal layer formed in advance is coincident with an alignment azimuth of liquid crystal molecules on a lower side of the cholesteric liquid crystal layer formed thereon, and polarization properties of a laminated body of the cholesteric liquid crystal layers become excellent by directly forming the next cholesteric liquid crystal layer on the surface of the cholesteric liquid crystal layer formed in advance. In addition, this is because in a case where an adhesive layer having a film thickness of generally 0.5 µm to 10 µm is used, interference unevenness derived from thickness unevenness of the adhesive layer is observed, and thus, it is preferable that the cholesteric liquid crystal layers are laminated without using the adhesive layer.

### (Preparation Method of Layer Formed by Immobilizing Cholesteric Liquid Crystalline Phase)

Hereinafter, a preparation material and a preparation method of the cholesteric liquid crystal layer will be described.

Examples of the material used for forming the cholesteric liquid crystal layer include a liquid crystal composition containing a polymerizable liquid crystal compound and a chiral agent (an optical active compound), and the like. As necessary, the liquid crystal composition which is mixed with a surfactant, a polymerization initiator, or the like and is dissolved in a solvent or the like is applied onto a support, an alignment film, a cholesteric liquid crystal layer which becomes a lower layer, and the like, a cholesteric alignment is matured, and then, is immobilized, and thus, the cholesteric liquid crystal layer is able to be formed.

### Polymerizable Liquid Crystal Compound

The polymerizable liquid crystal compound may be a rod-like liquid crystal compound, or a disk-like liquid crystal compound, and it is preferable that the polymerizable liquid crystal compound is a rod-like liquid crystal compound.

Examples of a rod-like polymerizable liquid crystal compound forming the cholesteric liquid crystal layer include a rod-like nematic liquid crystal compound. Azomethines, azoxys, cyanobiphenyls, cyanophenyl esters, benzoic acid esters, cyclohexane carboxylic acid phenyl esters, cyanophenyl cyclohexanes, cyano-substituted phenyl pyrimidines, alkoxy-substituted phenyl pyrimidines, phenyl dioxanes, trans, and alkenyl cyclohexyl benzonitriles are preferably used as the rod-like nematic liquid crystal compound. Not only a low molecular liquid crystal compound but also a high molecular liquid crystal compound is able to be used.

The polymerizable liquid crystal compound is able to be obtained by introducing a polymerizable group into a liquid crystal compound. Examples of the polymerizable group include an unsaturated polymerizable group, an epoxy group, and an aziridinyl group, and an unsaturated polymerizable group is preferable, and an ethylenically unsaturated polymerizable group is particularly preferable. The polymerizable group is able to be introduced into the molecules of the liquid crystal compound by various methods. The number of polymerizable groups of the polymerizable liquid crystal compound is preferably 1 to 6, and is more preferably 1 to 3. Examples of the polymerizable liquid crystal compound include compounds disclosed in Makromol. Chem., Vol. 190, Page 2255 (1989), Advanced Materials Vol. 5, Page 107 (1993), the specifications of US4683327A, US5622648A, and US5770107A, WO95/22586A, WO95/24455A, WO97/00600A, WO98/23580A, WO98/52905A, JP1989-272551A (JP-H01-272551A), JP1994-16616A (JP-H06-16616A), JP1995-110469A (JP-H07-110469A), JP1999-80081A (JP-H11-80081A), JP2001-328973A, and the like. Two or more types of polymerizable liquid crystal compounds may be combined. In a case where two or more types of polymerizable liquid crystal compounds are combined, it is possible to decrease an alignment temperature.

In addition, the added amount of the polymerizable liquid crystal compound to the liquid crystal composition is preferably 80 mass% to 99.9 mass%, is more preferably 85 mass% to 99.5 mass%, is particularly preferably 90 mass% to 99 mass%, with respect to the mass of solid contents of the liquid crystal composition (a mass excluding a solvent).

### Chiral Agent (Optical Active Compound)

A chiral agent has a function of inducing a spiral structure of the cholesteric liquid crystalline phase. Senses or spiral pitches of a spiral induced are different according to a compound, and thus, a chiral compound may be selected according to the purpose.

The chiral agent is not particularly limited, a known compound (for example, disclosed in Liquid Crystal Device Handbook, Chapter 3, Paragraph 4-3, Chiral Agent for TN and STN, Page 199, Japan Society for the Promotion of Science edited by 142nd committee, 1989), and derivatives of isosorbide and isomannide are able to be used.

In general, the chiral agent includes an asymmetric carbon atom, but an axial asymmetric compound or a planar asymmetric compound which does not include an asymmetric carbon atom is also able to be used as the chiral agent. Examples of the axial asymmetric compound or the planar asymmetric compound include binaphthyl, helicene, paracyclophane, and derivatives thereof. The chiral agent may have a polymerizable group. In a case where both of the chiral agent and the liquid crystal compound have a polymerizable group, a polymer having a repeating unit derived from the polymerizable liquid crystal compound and a repeating unit derived from the chiral agent is able to be formed by a polymerization reaction between the polymerizable chiral agent and the polymerizable liquid crystal compound. In this embodiment, it is preferable that the polymerizable group of the polymerizable chiral agent is identical to the polymerizable group of the polymerizable liquid crystal compound. Accordingly, it is preferable that the polymerizable group of the chiral agent is also an unsaturated polymerizable group, an epoxy group, or an aziridinyl group, an unsaturated polymerizable group is more preferable, and an ethylenically unsaturated polymerizable group is particularly preferable.

In addition, the chiral agent may be a liquid crystal compound.

In a case where the chiral agent has a photoisomerizing group, it is preferable that a desired pattern of a reflection wavelength corresponding to a light emission wavelength is able to be formed by photomask irradiation of an active light ray or the like after coating and alignment. An isomerizing portion of a compound exhibiting photochromic properties, an azo group, an azoxy group, and a cinnamoyl group are preferable as the photoisomerizing group. Compounds disclosed in JP2002-80478A, JP2002-80851A, JP2002-179668A, JP2002-179669A, JP2002-179670A, JP2002-179681A, JP2002-179682A, JP2002-338575A, JP2002-338668A, JP2003-313189A, and JP2003-313292A are able to be used as a specific compound.

The content of the chiral agent in the liquid crystal composition is preferably 0.01 mol% to 200 mol%, and is more preferably 1 mol% to 30 mol%, with respect to the amount of polymerizable liquid crystal compound.

### Polymerization Initiator

It is preferable that the liquid crystal composition contains a polymerization initiator. In an embodiment where a polymerization reaction progresses by ultraviolet ray irradiation, it is preferable that a polymerization initiator to be used is a photopolymerization initiator which is able to initiate a polymerization reaction by ultraviolet ray irradiation. Examples of the photopolymerization initiator include an α-carbonyl compound (disclosed in each of the specifications of US2367661A and US2367670A), acyloin ether (disclosed in the specification of US2448828A), an α-hydrocarbon-substituted aromatic acyloin compound (disclosed in the specification of US2722512A), a polynuclear quinone compound (disclosed in each of the specifications of US3046127A and US2951758A), a combination of a triaryl imidazole dimer and p-aminophenyl ketone (disclosed in the specification of US3549367A), an acridine compound and phenazine compound (disclosed in JP-1985-105667A (JP-S60-105667A) and the specification of US4239850A), an oxadiazole compound (disclosed in the specification of US4212970A), and the like.

The content of the photopolymerization initiator in the liquid crystal composition is preferably 0.1 mass% to 20 mass%, and is more preferably 0.5 mass% to 5 mass%, with respect to the content of the polymerizable liquid crystal compound.

### Cross-Linking Agent

The liquid crystal composition may arbitrarily contain a cross-linking agent in order to improve the film strength and durability after curing. A cross-linking agent which is cured by an ultraviolet ray, heat, humidity, and the like is able to be suitably used as the cross-linking agent.

The cross-linking agent is not particularly limited, but is able to be suitably selected according to the purpose, and examples of the cross-linking agent include a multifunctional acrylate compound such as trimethylol propane tri(meth)acrylate and pentaerythritol tri(meth)acrylate; an epoxy compound such as glycidyl (meth)acrylate and ethylene glycol diglycidyl ether; an aziridine compound such as 2,2-bishydroxy methyl butanol-tris[3-(1-aziridinyl) propionate] and 4,4-bis(ethylene iminocarbonyl amino) diphenyl methane; an isocyanate compound such as hexamethylene diisocyanate and biuret type isocyanate; a polyoxazoline compound having an oxazoline group in a side chain; an alkoxy silane compound such as vinyl trimethoxy silane and N-(2-aminoethyl)-3-aminopropyl trimethoxy silane, and the like. In addition, a known catalyst is able to be used according to reactivity of the cross-linking agent, and improvement of productivity is able to be attained in addition to improvement of film strength and durability improvement. One type of the cross-linking agent may be independently used, or two or more types thereof may be used in combination.

The content of the cross-linking agent is preferably 3 mass% to 20 mass%, and is more preferably 5 mass% to 15 mass%. In a case where the content of the cross-linking agent is less than 3 mass%, an effect of improving the density of the cross-linking is not obtained, and in a case where the content of the cross-linking agent is greater than 20 mass%, stability of the cholesteric liquid crystal layer may decrease.

### Alignment Control Agent

An alignment control agent may be added to the liquid crystal composition in order to stably or rapidly contribute to the formation of a cholesteric liquid crystal layer having planar alignment. Examples of the alignment control agent include a fluorine (meth)acrylate-based polymer disclosed in paragraphs [0018] to [0043] and the like of JP2007-272185A, compounds denoted by Formulas (I) to (IV) disclosed in paragraphs [0031] to [0034] and the like of JP2012-203237A, and the like.

Furthermore, one type of the alignment control agent may be independently used, or two or more types thereof may be used in combination.

The added amount of the alignment control agent to the liquid crystal composition is preferably 0.01 mass% to 10 mass%, is more preferably 0.01 mass% to 5 mass%, and is particularly preferably 0.02 mass% to 1 mass%, with respect to the total mass of the polymerizable liquid crystal compound.

### Other Additives

In addition to the additives described above, the liquid crystal composition may contain at least one selected from various additives such as a surfactant for making a film thickness even by adjusting a surface tension of a coated film, a polymerizable monomer, and the like. In addition, a polymerization inhibitor, an antioxidant, an ultraviolet absorbent, a light stabilizer, a coloring material, metal oxide fine particles, and the like are able to be further added to the liquid crystal composition, as necessary, in a range where optical performance does not decrease.

The cholesteric liquid crystal layer is able to form a cholesteric liquid crystal layer in which cholesteric regularity is immobilized by applying the liquid crystal composition in which the polymerizable liquid crystal compound and the polymerization initiator, and the chiral agent, the surfactant, and the like, added as necessary, are dissolved in a solvent onto the support, the alignment layer, the cholesteric liquid crystal layer prepared in advance, and the like, by drying the liquid crystal composition, by obtaining a coated film, by irradiating the coated film with an active light ray, and by polymerizing the cholesteric liquid crystal composition. Furthermore, a laminated film formed of a plurality of cholesteric liquid crystal layers is able to be formed by repeatedly performing a manufacturing step of the cholesteric liquid crystal layer.

The solvent used for preparing the liquid crystal composition is not particularly limited, but is able to be suitably selected according to the purpose, and an organic solvent is preferably used.

The organic solvent is not particularly limited, but is able to be suitably selected according to the purpose, and examples of the organic solvent include ketones, alkyl halides, amides, sulfoxides, a heterocyclic compound, hydrocarbons, esters, ethers, and the like. One type of the organic solvent may be independently used, or two or more types thereof may be used in combination. Among them, the ketones are particularly preferable in consideration of a load on the environment.

A coating method of the liquid crystal composition is not particularly limited, but is able to be suitably selected according to the purpose, and examples of the coating method include a wire bar coating method, a curtain coating method, an extruding coating method, a direct gravure coating method, a reverse gravure coating method, a die coating method, a spin coating method, a dip coating method, a spray coating method, a slide coating method, and the like. In addition, the coating method is able to be performed by transferring a liquid crystal composition applied onto a separate support. The coated liquid crystal composition is heated, and thus, liquid crystal molecules are aligned. A heating temperature is preferably lower than or equal to 200°C, and is more preferably lower than or equal to 130°C. By this alignment treatment, an optical thin film is able to be obtained in which the polymerizable liquid crystal compound is subjected to twisted alignment such that the polymerizable liquid crystal compound includes a spiral axis in a direction substantially perpendicular to a film surface.

The aligned liquid crystal compound may be further polymerized. The polymerization may be either thermal polymerization or photopolymerization of light irradiation, and the photopolymerization is preferable. It is preferable that the light irradiation is performed by using an ultraviolet ray. The irradiation energy is preferably 20 mJ/cm² to 50 J/cm², and is more preferably 100 mJ/cm² to 1,500 mJ/cm². In order to accelerate the photopolymerization reaction, the light irradiation may be performed under heating conditions or a nitrogen atmosphere. It is preferable that an irradiation wavelength of the ultraviolet ray is 350 nm to 430 nm. It is preferable that polymerization reactivity is high from the viewpoint of stability, and the polymerization reactivity is preferably greater than or equal to 70%, and is more preferably greater than or equal to 80%. The polymerization reactivity is able to determine a consumption ratio of a polymerizable functional group by using an IR absorption spectrum.

### (Directors of Liquid Crystal Molecules in Surface of Cholesteric Liquid Crystal Layer)

In the half mirror for displaying a projected image of the present invention, in the surface of the layer formed by immobilizing the cholesteric liquid crystalline phase on the projected image display side which is closest to the projected image display side, the directors of the liquid crystal molecules forming the cholesteric liquid crystalline phase are even. The directors of the liquid crystal molecules being even indicates that an alignment direction of the molecules forming the cholesteric liquid crystal layer is in a range of less than or equal to 40°, and is preferably in a range of less than or equal to 15°. The alignment direction of the liquid crystal molecules in the surface of the layer is able to be confirmed by a method of measuring polarization azimuth indicating the maximum value of reflectivity with respect to linear polarization having a wavelength other than the selective reflection band, a method of applying a liquid crystal composition to which a dichroic dye is mixed onto the surface of the liquid crystal layer and of measuring the azimuth of the maximum value of the polarization absorption thereof, or the like.

The present inventors have coincidentally found that when the projected image is displayed on the surface on the alignment layer side of the support side by using the cholesteric liquid crystal layer which is formed by applying a liquid crystal composition onto the rubbed surface of the alignment layer or the rubbed surface of the support, polarization dependency of reflectivity is considerably improved, and the improvement is remarkable in a case where projection light is polarized light, compared to a case where the projected image is displayed on the opposite surface. It is considered that the polarization dependency of the reflectivity is improved since unevenness and visualization of a variation in a director direction of the liquid crystal molecules in the outermost surface of the cholesteric liquid crystal layer is reduced by even directors of the liquid crystal molecules of the liquid crystal composition in the rubbed surface. It is assumed that this is because interference of reflection light on the outermost surface of the half mirror for displaying a projected image which does not depend on the polarization state and circular polarization selective reflection light from the cholesteric liquid crystal layer is one factor of the unevenness, the degree of interference is changed according to the variation in the director direction of the liquid crystal molecules, and the interference becomes the unevenness and is observed. By setting the surface in which the directors of the liquid crystal molecules are even to be a surface on the projected image display side, it is possible to solve the problem described above.

In the cholesteric liquid crystal layer, it is preferable that the directors of the liquid crystal molecules director in both surfaces are even. Further, in a half mirror including a plurality of cholesteric liquid crystal layers, it is preferable that the directors of the liquid crystal molecules are even in both surfaces of each of the cholesteric liquid crystal layers.

Such a configuration is able to be realized by a method of exactly setting the film thickness of the liquid crystal layer to be even, specifically, a producing method such as optimizing drying conditions, setting thickness unevenness to be less than or equal to 40 nm by using a surfactant, or performing polymerization and immobilization after maturing alignment by laminating a base which is formed by applying a liquid crystal composition and performing an alignment treatment such as rubbing after drying a solvent drying on a liquid crystal composition coating film such that air bubbles are not contained.

### (Support)

The support is not particularly limited. The support used for forming the cholesteric liquid crystal layer may be a temporary support which is peeled off after forming the cholesteric liquid crystal layer. In a case where the support is a temporary support, the support does not become a layer configuring the half mirror for displaying a projected image of the present invention, and thus, optical properties such as transparency or refraction properties are not particularly limited. In addition to a plastic film, glass and the like may be used as the support (the temporary support). Examples of the plastic film include polyester such as polyethylene terephthalate (PET), polycarbonate, an acrylic resin, an epoxy resin, polyurethane, polyamide, polyolefin, a cellulose derivative, silicone, and the like.

The film thickness of the support may be approximately 5 µm to 1000 µm, is preferably 10 µm to 250 µm, and is more preferably 15 µm to 90 µm.

### (Alignment Film)

The alignment film is able to be disposed by means such as a rubbing treatment of an organic compound and a polymer (a resin such as polyimide, polyvinyl alcohol, polyester, polyarylate, polyamide imide, polyether imide, polyamide, and modified polyamide), oblique vapor deposition of an inorganic compound, the formation of a layer having a microgroove, or the accumulation of an organic compound (for example, an ω-tricosanoic acid, dioctadecyl methyl ammonium chloride, and methyl stearate) using a Langmuir-Blodgett method (an LB film). Further, an alignment film is also known in which an alignment function occurs by application of an electric field, application of a magnetic field, or light irradiation.

In particular, it is preferable that an alignment film formed of a polymer is subjected to a rubbing treatment, and then, a composition is applied onto a rubbing treatment surface in order to form a liquid crystal layer. The rubbing treatment is able to be performed by rubbing the surface of the polymer layer with paper and cloth in a constant direction a plurality of times.

The liquid crystal composition may be applied onto the support surface or the surface of the support which is subjected to the rubbing treatment without disposing the alignment film.

In a case where the support is a temporary support, the alignment film may not become a layer configuring the half mirror for displaying a projected image of the present invention by being peeled off along with the temporary support.

The thickness of the alignment layer is preferably 0.01 µm to 5 µm, and is more preferably 0.05 µm to 2 µm.

### (Peeling of Temporary Support and Alignment Film)

The cholesteric liquid crystal layer is formed on the surface of the support or the surface of the alignment film surface, preferably a surface which has been subjected to a rubbing treatment, and after that, the temporary support and/or the alignment film is peeled off, and thus, a configuration of setting the surface in which the directors of the liquid crystal molecules are even as the projected image display side is able to be variously obtained. For example, it is possible to configure the half mirror for displaying a projected image by allowing the peeling surface to adhere to the antireflection layer. In addition, it is possible to set the surface to be the projected image display side by allowing the surface on a side opposite to the temporary support to adhere to the substrate or the like, and then by peeling off the temporary support and the alignment film, as necessary.

### (Antireflection Layer)

It is preferable that the half mirror for displaying a projected image of the present invention includes the antireflection layer. It is preferable that the antireflection layer is disposed on the outermost surface, and it is preferable that the antireflection layer is disposed on the outermost surface in a direction which becomes on an observation side (the projected image display side) at the time of using the half mirror for displaying a projected image. This is because brightness and darkness or color unevenness is reduced.

In addition, it is preferable that the antireflection layer is transparent with respect to visible light.

It is considered that the reason that the unevenness is reduced by the antireflection layer is because reflection light of the outermost surface is suppressed by disposing the antireflection layer on the outermost surface of the half mirror for displaying a projected image on the observation side. That is, it is considered that in the half mirror for displaying a projected image using the cholesteric liquid crystal layer, selective reflection on the cholesteric liquid crystal layer becomes strong or weak by interference between the reflection light on the outermost surface and selective reflection light on the cholesteric liquid crystal layer, and thus, the unevenness may be observed.

The antireflection layer has practically sufficient durability and heat resistance, is not particularly limited insofar as the reflectivity is able to be suppressed to be less than or equal to 5%, for example, at incidence of 60 degrees, but is able to be suitably selected according to the purpose, and examples of the configuration of the antireflection layer include a configuration of a two-layer film in which a film of high refractive index and a film of low refractive index are combined, a configuration of a three-layer film in which a film of intermediate refractive index, a film of high refractive index, and a film of low refractive index are sequentially laminated, and the like, in addition to a film having fine surface concavities and convexities.

A configuration of two layers including a layer of high refractive index/a layer of low refractive index, a configuration of three layers having different refractive indices in which a layer of intermediate refractive index (a layer having a refractive index which is higher than that of a lower layer and is lower than that of a layer of high refractive index)/a layer of high refractive index/a layer of low refractive index are sequentially laminated, from the lower side, and a configuration in which a plurality of antireflection layers are laminated are also proposed as the configuration example. Among them, a configuration sequentially including the layer of intermediate refractive index/the layer of high refractive index/the layer of low refractive index on a hard coat layer is preferable from the viewpoint of durability, optical properties, cost, productivity, and the like, and examples of the configuration include configurations disclosed in JP1996-122504A (JP-H08-122504A), JP1996-110401A (JP-H08-110401A), JP1998-300902A (JP-H10-300902A), JP2002-243906A, JP2000-111706A, and the like. In addition, an antireflection film of a three-layer configuration having excellent robustness with respect to a film thickness variation is disclosed in JP2008-262187A. In a case where the antireflection film of the three-layer configuration is disposed on the surface of an image display device, it is possible to set the average value of the reflectivity to be less than or equal to 0.5%, to considerably reduce reflected glare, and to obtain an image having an excellent cubic effect. In addition, other functions may be imparted to each of the layers, and examples of the layer having other functions include a layer of low refractive index having antifouling properties, a layer of high refractive index having antistatic properties, and a hard coat layer having antistatic properties, and a hard coat layer having anti-glare characteristics (for example, JP1998-206603A (JP-H10-206603A), JP2002-243906A, JP2007-264113A, and the like), and the like.

Examples of the inorganic material configuring the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, WO₃, and the like, and this inorganic material is able to be independently used, or two or more types thereof are able to be used in combination. Among them, SiO₂, ZrO₂, TiO₂, and Ta₂O₅ are preferable since vacuum vapor deposition is able to be performed at a low temperature and a film is also able to be formed on the surface of a plastic substrate.

A laminated structure of alternately forming a high refractive index material layer and a low refractive index material layer in which the total optical film thickness of a ZrO₂ layer and a SiO₂ layer is λ/4, the optical film thickness of a ZrO₂ layer is λ/4, and the optical film thickness of an SiO₂ layer of the outermost layer is λ/4 from the substrate side is exemplified as a multilayer film formed of the inorganic material. Here, λ is a design wavelength, and is generally 520 nm. It is preferable that the outermost layer is formed of SiO₂ since a refractive index is low and mechanical intensity is able to be imparted to the antireflection layer.

In a case where the antireflection layer is formed of the inorganic material, for example, a vacuum vapor deposition method, an ion plating method, a sputtering method, a CVD method, a method of performing eduction in a saturated solution by a chemical reaction, and the like are able to be adopted as a film formation method.

Examples of the organic material used in the layer of low refractive index are able to include a tetrafluoroethylene-hexafluoropropylene (FFP) copolymer, polytetrafluoroethylene (PTFE), an ethylene-tetrafluoroethylene (ETFE) copolymer, and the like, and a composition containing a fluorine-containing curable resin and inorganic fine particles disclosed in JP2007-298974A, and a hollow silica fine particles-containing low refractive index coating composition disclosed in JP2002-317152A, JP2003-202406A, and JP2003-292831A are able to be preferably used. In addition to the vacuum vapor deposition method, the film is able to be formed by a coating method such as a spin coating method, a dip coating method, and a gravure coating method with excellent productivity.

It is preferable that the refractive index of the layer of low refractive index is 1.30 to 1.51. The refractive index is preferably 1.30 to 1.46, and is more preferably 1.32 to 1.38.

Examples of the organic material used in the layer of intermediate refractive index and the layer of high refractive index are able to include a binder obtained by a cross-linking reaction or a polymerization reaction of an ionizing radiation curable compound having an aromatic ring, an ionizing radiation curable compound containing a halogenated atom other than fluorine (for example, Br, I, Cl, and the like), and an ionizing radiation curable compound containing an atom such as S, N, P, and the like, and inorganic particles containing TiO₂ as a main component which is added thereto. Specifically, organic materials disclosed in paragraphs [0074] to [0094] of JP2008-262187A are able to be exemplified.

The refractive index of the layer of high refractive index is preferably 1.65 to 2.20, and is more preferably 1.70 to 1.80. The refractive index of the layer of intermediate refractive index is adjusted to have a value between the refractive index of the layer of high refractive index and the refractive index of the layer of low refractive index. The refractive index of the layer of intermediate refractive index is preferably 1.55 to 1.65, and is more preferably 1.58 to 1.63.

The film thickness of the antireflection layer is not particularly limited, and may be approximately 0.1 µm to 10 µm, 1 µm to 5 µm, and 2 µm to 4 µm.

### (Substrate)

Herein, a substrate indicates a layer which is disposed in order to maintain the shape of the cholesteric liquid crystal layer, may be identical to the support used at the time of forming the cholesteric liquid crystal layer, or may be disposed separately from the support.

It is preferable that the substrate is transparent in a visible light range.

The half mirror for displaying a projected image of the present invention may or may not include the substrate, and for example, the half mirror for displaying a projected image of the present invention may be bonded to a transparent plate which is at least a part of other products such as front glass of vehicle, and at least a part of the product may function as the substrate.

The same materials as those exemplified in the support are able to be used as the substrate. In addition, the film thickness of the substrate may be the same film thickness as that of the support described above, and may be greater than 1000 µm, or may be greater than or equal to 10 mm. In addition, the film thickness of the substrate may be less than or equal to 200 mm, may be less than or equal to 100 mm, may be less than or equal to 80 mm, may be less than or equal to 60 mm, may be less than or equal to 50 mm, may be less than or equal to 40 mm, may be less than or equal to 30 mm, may be less than or equal to 20 mm, and the like.

In the half mirror for displaying a projected image of the present invention, the cholesteric liquid crystal layer may be disposed on one surface of the substrate, and it is preferable that the cholesteric liquid crystal layer is not disposed on the other surface.

In a case where the projected image is viewed on the surface on which the cholesteric liquid crystal layer is disposed, double images are observed by a boundary reflection in the surface of the substrate on a side opposite side to the surface on which the cholesteric liquid crystal layer is disposed or an air surface of the other layer which is disposed on the surface. In order to prevent such a phenomenon, the antireflection layer may be disposed on the surface of the substrate on the opposite side. Furthermore, herein, the antireflection layer disposed on the surface of the substrate on the opposite side is referred to as an antireflection layer 2, and the antireflection layer disposed on the surface of the cholesteric liquid crystal layer on the observation side is referred to as an antireflection layer 1.

In a case where a substrate having low birefringence is used as the substrate, the double images rarely occur even in a case where the antireflection layer 2 is not included. This is an unexpected effect which is obtained by using the cholesteric liquid crystal layer as a reflection layer, and is not obtained by a reflection layer of an inorganic compound or hologram.

Examples of the substrate having low birefringence which is transparent in a visible light range include an inorganic glass or a high molecular resin. The organic material having low birefringence which is used in an optical disk substrate in which birefringence causes hindrance of image formation or signal noise, a pickup lens, a lens for a camera, a microscope, or a video camera, a substrate for a liquid crystal display, a prism, an optical interconnection component, a light fiber, a light guide plate for a liquid crystal display, a lens for a laser beam printer, a projector, or a facsimile, a fresnel lens, a contact lens, a polarizing plate protective film, a micro lens array, and the like is able to be similarly used as the high molecular resin having low birefringence.

Specific examples of a high molecular resin material which is able to be used for this object are able to include an acrylic resin (acrylic acid esters or the like such as polymethyl (meth)acrylate), polycarbonate, cyclic polyolefin such as cyclopentadiene-based polyolefin or norbornene-based polyolefin, polyolefins such as polypropylene, aromatic vinyl polymers such as polystyrene, polyarylate, and cellulose acylate.

### (Adhesive Layer)

The adhesive layer may be formed of an adhesive agent.

Examples of the adhesive agent include a hot melt type adhesive agent, a thermal curing type adhesive agent, a photocuring type adhesive agent, a reaction curing type adhesive agent, and a pressure sensitive adhesion type adhesive agent in which curing is not necessary, from the viewpoint of a curing method, and a compound such as an acrylate-based compound, a urethane-based compound, a urethane acrylate-based compound, an epoxy-based compound, an epoxy acrylate-based compound, a polyolefin-based compound, a modified olefin-based compound, a polypropylene-based compound, an ethylene vinyl alcohol-based compound, a vinyl chloride-based compound, a chloroprene rubber-based compound, a cyanoacrylate-based compound, a polyamide-based compound, a polyimide-based compound, a polystyrene-based compound, and a polyvinyl butyral-based compound is able to be used as a material of each adhesive agent. From the viewpoint of workability and productivity, the photocuring type adhesive agent is preferable in a curing method, and from the viewpoint of optical transparency and heat resistance, the acrylate-based compound, the urethane acrylate-based compound, the epoxy acrylate-based compound, and the like are preferably used as the material.

The film thickness of the adhesive layer may be 0.5 µm to 10 µm, and may be preferably 1 µm to 5 µm. In order to reduce color unevenness or the like of the half mirror for displaying a projected image, it is preferable that the film thickness becomes even.

### (Application)

The half mirror for displaying a projected image of the present invention is combined with various projectors, and thus, is able to be used for displaying a projected image. That is, the half mirror for displaying a projected image of the present invention is able to be used as a configuration member of a projected image display system. The projected image display system, for example, may be a projected image display device, may be an integration of the half mirror for displaying a projected image and the projector, or may be used as a combination of the half mirror for displaying a projected image and the projector.

Herein, the projected image does not indicate the surrounding scenery, but indicates a video based on light projection from the projector to be used. The projected image may be a video having a single color, or may be a video having a multicolor or a full color. The projected image may be formed by reflection light of a half mirror. The projected image may be displayed and viewed on the half mirror for displaying a projected image surface of the present invention, or may be a virtual image which is viewed as floating on the half mirror for displaying a projected image in a case of being viewed by an observer.

The projector which is combined with the half mirror for displaying a projected image of the present invention is not particularly limited insofar as the projector has a function of projecting an image. Examples of the projector include a liquid crystal projector, a digital light processing (DLP) projector using a digital micromirror device (DMD), a grating light valve (GLV) projector, a liquid crystal on silicon (LCOS) projector, a CRT projector, and the like. The DLP projector and the grating light valve (GLV) projector may use microelectromechanical systems (MEMS).

A laser light source, an LED, a discharge tube, and the like are able to be used as a light source of the projector.

Specific examples of the application of the half mirror for displaying a projected image of the present invention include a flat mirror, a concave mirror, a convex mirror, and the like for virtual image formation of various projectors, such as a reflection mirror used in a combiner of a head up display or a projection device, a reflection screen for a see-through display, a reflection mirror for a head mount display, and a dichroic mirror. The application as the combiner of the head up display can be referred to that in JP2013-79930A and WO2005/124431A.

The half mirror for displaying a projected image of the present invention is useful at the time of being used in combination with the projector using laser of which a light emission wavelength is not continuous in a visible light range, an LED, an OLED, and the like in a light source. The center wavelength of the selective reflection of the cholesteric liquid crystal layer is able to be adjusted according to each light emission wavelength. In addition, it is preferable that a liquid crystal display device (LCD), an OLED, and the like are used for projection of a display of which display light is polarized. As described above, this is because in the half mirror for displaying a projected image of the present invention, a problem based on polarization dependency of circular polarization reflectivity which may occur in a case where the projection light includes polarize light or in observation through a film or the like having a polarization function rarely occurs.

### Examples

Hereinafter, the present invention will be described in more detail with reference to examples. Materials, reagents, substance quantities and ratios thereof, operations, and the like described in the following examples are able to be suitably changed insofar as the change is not departed from the gist of the present invention. Accordingly, the scope of the present invention is not limited to the following examples.

### [Example 1]

A coating liquid A-2 shown in Table 1 was applied onto a rubbing treatment surface of PET manufactured by Fujifilm Corporation which had been subjected to a rubbing treatment at room temperature by using a wire bar such that the thickness of a dried film after being dried became 3.5 µm. A coated layer was dried at room temperature for 30 seconds, and then, was heated in an atmosphere of 85°C for 2 minutes, and after that, UV irradiation was performed at 70°C with an output of 60% for 6 seconds to 12 seconds by a D valve (a lamp of 90 mW/cm) manufactured by Heraeus K. K., and thus, a cholesteric liquid crystal layer 1 of which the center wavelength of selective reflection was 530 nm was obtained.

Next, a UV curing type adhesive agent Exp. U12034-6 manufactured by DIC Corporation was applied onto a TAC film having a thickness of 60 µm at room temperature by using a wire bar such that the thickness of a dried film after being dried was 5 µm. The coating surface was bonded to the surface of the cholesteric layer 1 prepared as described above on the liquid crystal layer side such that air bubbles were not contained, and after that, UV irradiation was performed at 30°C with an output of 60% for 6 seconds to 12 seconds by using a D valve (a lamp of 90 mW/cm) manufactured by Heraeus K. K., and PET was peeled off, and thus, a half mirror 1 of Example 1 was formed.

The half mirror 1 which was separately formed by using the same method was prepared, a guest-host room temperature liquid crystal composition to which a dichroic colorant was mixed was applied onto a liquid crystal surface on a side from which a PET base was peeled off such that the thickness thereof was 5 µm, was left to stand at room temperature for 3 minutes, and then, an absorption direction of the colorant was examined by using a linear polarizing plate, and thus, it was confirmed that a PET side peeling boundary of the liquid crystal layer, that is, an alignment direction of liquid crystal molecules in the outermost surface of the half mirror 1 was arranged to be even in an angle range since the absorption direction was in a range of ±5 degrees based on a rubbing direction in the range of the area of 10 cm square.

### [Example 2]

A coating liquid A-3 shown in Table 1 was applied onto a rubbing treatment surface of PET manufactured by Fujifilm Corporation which had been subjected to a rubbing treatment at room temperature by using a wire bar such that the thickness of a dried film after being dried became 4 µm. A coated layer was dried at room temperature for 30 seconds, and then, was heated in an atmosphere of 85°C for 2 minutes, and after that, UV irradiation was performed at 70°C with an output of 60% for 6 seconds to 12 seconds by a D valve (a lamp of 90 mW/cm) manufactured by Heraeus K. K., and thus, a liquid crystal layer was obtained. The coating liquid A-2 shown in Table 1 was applied onto the liquid crystal layer at room temperature such that the thickness of a dried film after being dried was 3.5 µm, and after that, drying, heating, and UV irradiation were performed by the same method as described above, and thus, a second liquid crystal layer was formed. Further, the coating liquid A-1 shown in Table 1 was applied onto the second liquid crystal layer at room temperature such that the thickness of a dried film after being dried was 3 µm, and after that, drying, heating, and UV irradiation were performed by the same method as described above, and thus, a third liquid crystal layer was formed, and a cholesteric liquid crystal layer 2 having center wavelengths of selective reflection at 640 nm, 530 nm, and 450 nm was obtained.

The PET base to which TAC was bonded was peeled off by the same method as that in Example 1 except that the cholesteric liquid crystal layer 2 was used, and thus, a half mirror 2 of Example 2 was obtained.

The half mirror 2 which was separately formed by using the same method was prepared, and a liquid crystal including a dichroic colorant was applied and an absorption direction of the colorant was examined by the same method as that in Example 1, and thus, it was confirmed that a PET side peeling boundary of the liquid crystal layer, that is, an alignment direction of liquid crystal molecules in the outermost surface of the half mirror 2 was arranged to be even in an angle range since the absorption direction was in a range of ±5 degrees based on a rubbing direction in the range of the area of 10 cm square.

### [Example 3]

A film with an antireflection layer 1 having surface reflectivity at 530 nm of 0.4%, in which a hard coat layer having a refractive index of 1.52 and a thickness of 3.0 µm was formed on a TAC film having a thickness of 40 µm of a base, a layer of intermediate refractive index having a refractive index of 1.594 and a thickness of 0.06 µm was formed thereon, a layer of high refractive index having a refractive index of 1.708 and a thickness of 0.13 µm was formed thereon, and a layer of low refractive index having a refractive index of 1.343 and a thickness of 0.095 µm was formed thereon, was prepared as the antireflection layer. Next, a UV curing type adhesive agent Exp. U12034-6 manufactured by DIC Corporation was applied onto the surface of a transparent polycarbonate substrate having a thickness of 5 mm and having retardation of greater than or equal to 500 nm in the plane where color unevenness due to the size of retardation or unevenness in a slow axis direction was able to be viewed at room temperature by using a wire bar such that the thickness of a dried film after being dried was 5 µm in a state of being disposed between orthogonal polarizing plates. The coating surface was bonded to the surface of TAC of the film with an antireflection layer 1 described above such that air bubbles were not contained, and after that, UV irradiation was performed at 30°C with an output of 60% for 6 seconds to 12 seconds by using a D valve (a lamp of 90 mW/cm) manufactured by Heraeus K. K., and thus, a substrate with an antireflection layer was formed. Subsequently, the adhesive agent was applied onto one surface of the transparent polycarbonate substrate, and the TAC surface side of the half mirror 2 prepared in Example 2 was bonded thereto, and then adhered thereto with the same procedure, and thus, a half mirror 3 of Example 3 was obtained.

### [Example 4]

The TAC surface side of the half mirror 2 prepared in Example 2 was bonded to the surface of a transparent methacrylic substrate ("Acrylite L" manufactured by Mitsubishi Rayon Co., Ltd.) having maximum retardation of 7 nm in the plane of 10 cm square where in-plane color unevenness was not able to be viewed and having a thickness of 5 mm by the same method as that in Example 3 in a state of being disposed between orthogonal polarizing plates, and thus, a half mirror 4 of Example 4 was obtained.

### [Example 5]

The same adhesive agent as that used in Example 1 was applied onto the surface of the same transparent acrylic substrate as that used in Example 4, the TAC surface side of the same film with an antireflection layer 1 as that used in Example 3 was bonded thereto, and then adhered thereto with the same procedure as that in Example 1. Further, the same adhesive agent as that used in Example 11 was applied onto one surface of the substrate, the liquid crystal layer side of the half mirror 2 prepared in Example 2 was bonded thereto, and then adhered thereto with the same procedure, and thus, a half mirror 5 of Example 5 was obtained.

### [Example 6]

An adhesive agent was applied onto the surface of the liquid crystal layer of the half mirror 2 prepared in Example 2 by the same method as that in Example 1, the TAC surface side of the same film with an antireflection layer 1 as that used in Example 3 was bonded thereto, and thus, a half mirror 6 of Example 6 was obtained.

### [Example 7]

An adhesive agent was applied onto the surface of the liquid crystal layer of the half mirror 3 prepared in Example 3 by the same method as that in Example 1, the TAC surface side of the same film with an antireflection layer 1 as that used in Example 3 was bonded thereto, and thus, a half mirror 7 of Example 7 was obtained.

### [Example 8]

An adhesive agent was applied onto the surface of the liquid crystal layer of the half mirror 4 prepared in Example 4 by the same method as that in Example 1, the TAC surface side of the same film with an antireflection layer 1 as that used in Example 3 was bonded thereto, and thus, a half mirror 8 of Example 8 was obtained.

### [Example 9]

An adhesive agent was applied onto the surface of the same transparent polycarbonate substrate as that used in Example 3 by the same method as that in Example 1, the TAC surface side of the same film with an antireflection layer 1 as that used in Example 3 was bonded thereto, and then adhered thereto with the same procedure. Further, the adhesive agent of Example 1 was applied onto one surface of the substrate, the liquid crystal layer side of the half mirror 2 prepared in Example 2 was bonded thereto, and then adhered thereto with the same procedure, and thus, a half mirror 9 of Example 9 was obtained.

### [Comparative Example 1]

The coating liquid A-2 shown in Table 1 was applied onto a rubbing treatment surface of PET manufactured by Fujifilm Corporation which had been subjected to a rubbing treatment at room temperature by using a wire bar such that the thickness of a dried film after being dried became 3.5 µm. A coated layer was dried at room temperature for 30 seconds, and then, was heated in an atmosphere of 85°C for 2 minutes, and after that, UV irradiation was performed at 70°C with an output of 60% for 6 seconds to 12 seconds by a D valve (a lamp of 90 mW/cm) manufactured by Heraeus K. K., and thus, a half mirror of Comparative Example 1 of which the center wavelength of reflection was 530 nm was obtained.

### [Comparative Example 2]

The coating liquid A-1 shown in Table 1 was applied onto a rubbing treatment surface of PET manufactured by Fujifilm Corporation which had been subjected to a rubbing treatment at room temperature by using a wire bar such that the thickness of a dried film after being dried became 3 µm. A coated layer was dried at room temperature for 30 seconds, and then, was heated in an atmosphere of 85°C for 2 minutes, and after that, UV irradiation was performed at 70°C with an output of 60% for 6 seconds to 12 seconds by a D valve (a lamp of 90 mW/cm) manufactured by Heraeus K. K., and thus, a liquid crystal layer was obtained. The coating liquid A-2 shown in Table 1 was applied onto the liquid crystal layer at room temperature such that the thickness of a dried film after being dried was 3.5 µm, and after that, drying, heating, and UV irradiation were performed by the same method as described above, and thus, a second liquid crystal layer was formed. Further, the coating liquid A-3 shown in Table 1 was applied onto the second liquid crystal layer at room temperature such that the thickness of a dried film after being dried was 4 µm, and after that, drying, heating, and UV irradiation were performed by the same method as described above, and thus, a third liquid crystal layer was formed, and a half mirror of Comparative Example 2 having reflection peak wavelengths at 450 nm, 530 nm, and 640 nm was obtained.

### [Comparative Example 3]

An adhesive agent was applied onto the surface of the same transparent polycarbonate substrate as that used in Example 3 by the same method as that in Example 1, a PET base of the cholesteric liquid crystal layer 2 prepared by the same method as that in Comparative Example 2 was peeled off, and the PET peeling side of the liquid crystal layer was bonded thereto by the same method as that in Comparative Example 2. Subsequently, the adhesive agent was applied onto one surface of the transparent polycarbonate substrate, and the TAC surface side of the film with an antireflection layer 1 prepared in Example 3 was bonded thereto, and then adhered thereto with the same procedure, and thus, a half mirror of Comparative Example 3 was obtained.

### [Comparative Example 4]

An adhesive agent was applied onto the surface of the same transparent acrylic substrate as that used in Example 4 by the same method as that in Example 1, a PET base of the half mirror prepared by the same method as that in Comparative Example 2 was peeled off, and the PET peeling side of the liquid crystal layer was bonded thereto by the same method as that in Comparative Example 2, and thus, a half mirror of Comparative Example 4 was obtained.

### [Comparative Example 5]

An adhesive agent was applied onto the surface of the same transparent acrylic substrate as that used in Example 4 by the same method as that in Example 1, the liquid crystal side of the half mirror prepared in Comparative Example 2 was bonded thereto by the same method as that in Comparative Example 2, and a PET base was peeled off, and thus, a half mirror of Comparative Example 5 was obtained.

### [Comparative Example 6]

A half mirror was formed by performing aluminum vapor deposition with respect to one side surface of the same polycarbonate substrate as that used in Example 3. Further, an adhesive agent was applied onto a side opposite to the substrate by the same method as that in Example 1, the TAC surface side of the same film with an antireflection layer 1 as that used in Example 3 was bonded thereto, and then adhered thereto with the same procedure, and thus, a half mirror of Comparative Example 6 was formed.

The evaluation results of the half mirrors prepared in the examples and the comparative examples are shown in Table 2. Furthermore, in Table 2, the left side of the layer configuration of the prepared half mirror is described as a projected image display side (a projection light incidence side), and in a case of including a rubbed surface, the left side of the position of the rubbed surface is also similarly described as the projected image display side in a relationship with respect to the layer configuration. In addition, "R reflection Ch" indicates a cholesteric liquid crystal layer having a center wavelength of selective reflection at 640 nm, "G reflection Ch" indicates a cholesteric liquid crystal layer having a center wavelength of selective reflection at 530 nm, and "B reflection Ch" indicates a cholesteric liquid crystal layer having a center wavelength of selective reflection at 450 nm.

In Table, natural light transmittance is measured by using a visible ultraviolet spectrophotometer, and indicates average transmittance with respect to natural light in a wavelength region of 380 nm to 780 nm. Projection light reflectivity is measured by using a visible ultraviolet spectrophotometer, Example 1 and Comparative Example 1 indicate regular reflectivity with respect to natural light having a wavelength of 530 nm, and the others indicate the average value of regular reflectivity with respect to natural light having wavelengths of 450 nm, 530 nm, and 640 nm.

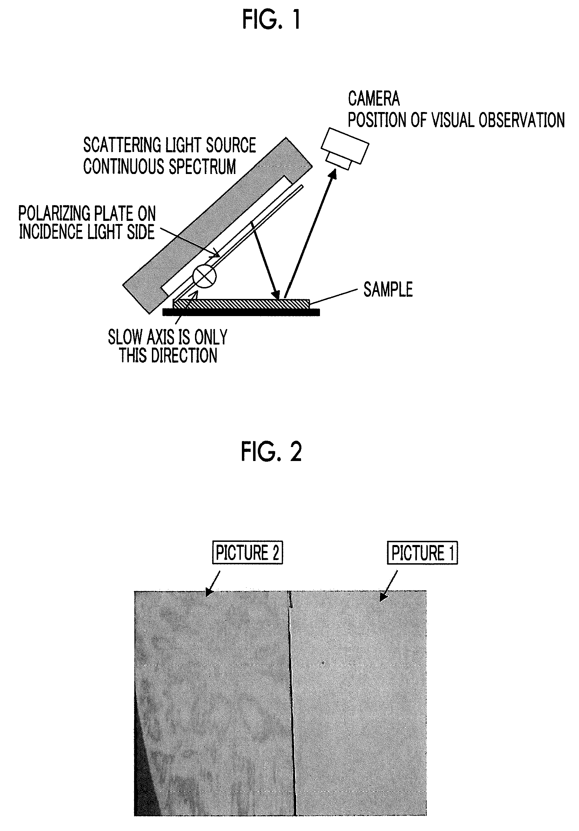

The evaluation of reflection unevenness in-plane evenness was performed as follows. The half mirror (a sample) was horizontally disposed on a black underlay (black velvet) such that the projection light side surface thereof was on the upper side. As illustrated in Fig. 1, the sample was irradiated with light of white Schaukasten in which a linear polarizing plate was bonded to a light emission surface from the upper surface, and thus, in-plane evenness of reflection light of the sample was visually evaluated. A comparison between Example 1 (a picture 1) and Comparative Example 1 (a picture 2) was also shown in Fig. 2.
A: The unevenness is not able to be viewed.
B: The unevenness is observed but is difficult to be viewed.
C: The unevenness is observed.
D: The unevenness is remarkably observed.

The evaluation of the double images was performed by allowing green laser pointer light to be incident on the projection light side surface side of the half mirror, and by performing visual observation on the basis of the following criteria.
A: The double images are difficult to be viewed.
B: The double images are remarkably viewed.

**[Table 1]**

| | | Coating Liquid Name | | |
|---|---|---|---|---|
| Material (Type) | Material Name (Maker) | A-1 | A-2 | A-3 |
| Liquid Crystal Compound | Compound 1 | 100 Parts by Mass | 100 Parts by Mass | 100 Parts by Mass |
| Polymerization Initiator | Irg-819 (Manufactured by BASF SE) | 4 Parts by Mass | 4 Parts by Mass | 4 Parts by Mass |
| Air Boundary Side Alignment Control Agent | Compound 2 | 0.04 Parts by Mass | 0.04 Parts by Mass | 0.04 Parts by Mass |
| Chiral Agent | LC-756 (Manufactured by BASF SE) | 6.7 Parts by Mass | 5.6 Parts by Mass | 4.7 Parts by Mass |
| Solvent | 2-butanol (Manufactured by Wako Pure Chemical Industries, Ltd.) | Suitably Adjusted according to Film Thickness | Suitably Adjusted according to Film Thickness | Suitably Adjusted according to Film Thickness |

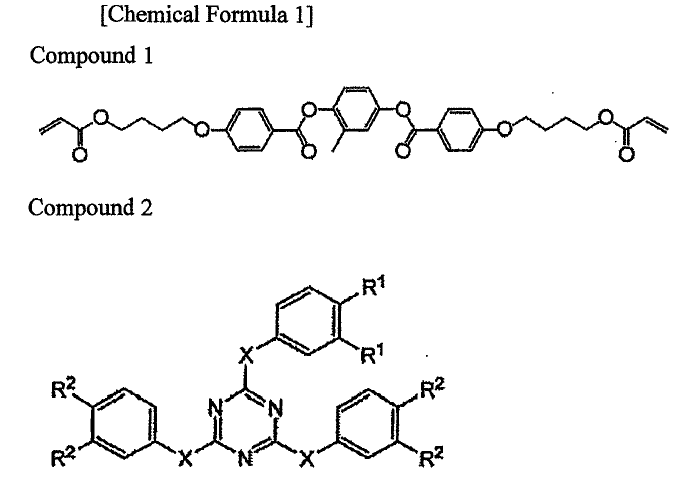

| R¹ | R² | X |
|---|---|---|
| O(CH₂)₂O(CH₂)₂(CF₂)₆F | O(CH₂)₂O(CH₂)₂(CF₂)₆F | NH |

**[Table 2]**

| | Configuration: Left Side is Projection Light Incidence Side | Natural Light Transmittance/% | Projection Light Reflectivity/% | In-Plane Evenness of Unevenness | Double Images |
|---|---|---|---|---|---|
| Example 1 | (Rubbing Surface) G Reflection Ch/TAC | 86 | 53 | A | A |
| Example 2 | (Rubbing Surface) R Reflection Ch/G Reflection Ch/B Reflection Ch/TAC | 74 | 54 | B | A |
| Example 3 | (Rubbing Surface) R Reflection Ch/G Reflection Ch/B Reflection Ch/TAC/Polycarbonate Substrate/Antireflection Layer | 74 | 53 | B | A |
| Example 4 | (Rubbing Surface) R Reflection Ch/G Reflection Ch/B Reflection Ch/TAC/Acrylic Substrate | 74 | 53 | B | A |
| Example 5 | Acrylic Substrate/(Rubbing Surface) R Reflection Ch/G Reflection Ch/B Reflection Ch/TAC | 74 | 52 | B | A |
| Example 6 | Antireflection Layer/(Rubbing Surface) R Reflection Ch/G Reflection Ch/G Reflection Ch/TAC | 77 | 50 | A | A |
| Example 7 | Antireflection Layer/(Rubbing Surface) R Reflection Ch/G Reflection Ch/B Reflection Ch/TAC/Polycarbonate Substrate/Antireflection Layer | 78 | 50 | A | A |
| Example 8 | Antireflection Layer/(Rubbing Surface) R Reflection Ch/G Reflection Ch/B Reflection Ch/TAC/Acrylic Substrate | 77 | 50 | A | A |
| Example 9 | Antireflection Layer/Polycarbonate Substrate/(Rubbing Surface) R Reflection Ch/G Reflection Ch/B Reflection Ch/TAC | 77 | 50 | A | A |
| | | | | | |
| Comparative Example 1 | G Reflection Ch (Rubbing Surface)/PET | 82 | 54 | D | B |
| Comparative Example 2 | R Reflection Ch/G Reflection Ch/B Reflection Ch (Rubbing Surface)/PET | 70 | 52 | D | B |
| Comparative Example 3 | R Reflection Ch/G Reflection Ch/B Reflection Ch (Rubbing Surface)/Polycarbonate Substrate/Antireflection Layer | 74 | 53 | D | A |
| Comparative Example 4 | R Reflection Ch/G Reflection Ch/B Reflection Ch (Rubbing Surface)/Acrylic Substrate | 73 | 53 | D | A |
| Comparative Example 5 | Acrylic Substrate/R Reflection Ch/G Reflection Ch/B Reflection Ch (Rubbing Surface) | 73 | 52 | C | A |
| Comparative Example 6 | Al Vapor Deposition/Polycarbonate Substrate/Antireflection Layer | 64 | 33 | B | A |

## Claims

1. A half mirror for displaying a projected image having visible light transmittance, comprising:
a layer formed by immobilizing a cholesteric liquid crystalline phase,
wherein in a surface of the layer formed by immobilizing the cholesteric liquid crystalline phase on a projected image display side which is closest to the projected image display side, directors of liquid crystal molecules forming a cholesteric liquid crystalline phase are even.

2. The half mirror for displaying a projected image according to claim 1, further comprising:
three or more layers formed by immobilizing a cholesteric liquid crystalline phase,
wherein the three or more layers formed by immobilizing the cholesteric liquid crystalline phase exhibit different center wavelengths of selective reflection.

3. The half mirror for displaying a projected image according to claim 2,
wherein directors of liquid crystal molecules forming a cholesteric liquid crystalline phase of both surfaces of each of the three or more layers formed by immobilizing the cholesteric liquid crystalline phase are even.

4. The half mirror for displaying a projected image according to claim 2 or 3,
wherein the three or more layers formed by immobilizing the cholesteric liquid crystalline phase are obtained by repeatedly forming another layer formed by immobilizing a cholesteric liquid crystalline phase directly on a surface of a layer formed by immobilizing a cholesteric liquid crystalline phase which is prepared in advance, and
other layers are not included between any layers of the three or more layers formed by immobilizing the cholesteric liquid crystalline phase.

5. The half mirror for displaying a projected image according to any one of claims 1 to 4, further comprising:
a layer formed by immobilizing a cholesteric liquid crystalline phase which has a center wavelength of apparent selective reflection with respect to red light;
a layer formed by immobilizing a cholesteric liquid crystalline phase which has a center wavelength of apparent selective reflection with respect to green light; and
a layer formed by immobilizing a cholesteric liquid crystalline phase which has a center wavelength of apparent selective reflection with respect to blue light.

6. The half mirror for displaying a projected image according to any one of claims 1 to 5, further comprising:
an antireflection layer,
wherein the antireflection layer is on an outermost surface on the projected image display side.

7. The half mirror for displaying a projected image according to any one of claims 1 to 6, further comprising:
a substrate.

8. The half mirror for displaying a projected image according to any one of claims 1 to 7,
wherein the half mirror for displaying a projected image includes an antireflection layer 1, the layer formed by immobilizing the cholesteric liquid crystalline phase, and the substrate in this order.

9. The half mirror for displaying a projected image according to claim 8,
wherein the half mirror for displaying a projected image includes the antireflection layer 1, the layer formed by immobilizing the cholesteric liquid crystalline phase, the substrate, and an antireflection layer 2 in this order.

10. The half mirror for displaying a projected image according to claim 7 or 8,
wherein the substrate is a substrate having low birefringence, and
the antireflection layer is not included on a side of the layer formed by immobilizing the cholesteric liquid crystalline phase opposite to the substrate.

11. The half mirror for displaying a projected image according to claim 10,
wherein the substrate is glass or an acrylic resin.

12. The half mirror for displaying a projected image according to any one of claims 1 to 7,
wherein the half mirror for displaying a projected image includes an antireflection layer 1, the substrate, and the layer formed by immobilizing the cholesteric liquid crystalline phase in this order.

13. The half mirror for displaying a projected image according to any one of claims 1 to 12,
wherein the half mirror for displaying a projected image is used as a combiner of a head up display.

14. A projected image display system, comprising:
a projector; and
the half mirror for displaying a projected image according to any one of claims 1 to 13,
wherein a light emission wavelength of a light source of the projector is in a selective reflection band of the layer formed by immobilizing the cholesteric liquid crystalline phase.

15. A projected image display system, comprising:
a projector; and
the half mirror for displaying a projected image according to any one of claims 8 to 12,
wherein a light emission wavelength of a light source of the projector is in a selective reflection band of the layer formed by immobilizing the cholesteric liquid crystalline phase, and
the projector, the antireflection layer 1, and the layer formed by immobilizing the cholesteric liquid crystalline phase are arranged in this order.

16. The projected image display system according to claim 14 or 15,
wherein the projected image display system is used as a head up display.

17. A method for producing a half mirror for displaying a projected image having visible light transmittance which includes a layer formed by immobilizing a cholesteric liquid crystalline phase, the method comprising:
(1) applying a liquid crystal composition containing a polymerizable liquid crystal compound onto a surface of a temporary support which has been subjected to rubbing or a surface of an alignment layer disposed on the temporary support;
(2) forming a cholesteric liquid crystalline phase by aligning the polymerizable liquid crystal compound and forming a layer formed by immobilizing a cholesteric liquid crystalline phase from the liquid crystal composition by immobilizing the alignment;
(3) peeling off the temporary support; and
(4) allowing the layer formed by immobilizing the cholesteric liquid crystalline phase to adhere to a substrate such that a peeling surface which is obtained after the peeling becomes a projected image display side.

18. A method for producing a half mirror for displaying a projected image having visible light transmittance which includes a layer formed by immobilizing a cholesteric liquid crystalline phase and an antireflection layer on an outermost surface on a projected image display side, the method comprising:
(1) applying a liquid crystal composition containing a polymerizable liquid crystal compound onto a surface of a temporary support which has been subjected to rubbing or a surface of an alignment layer disposed on the temporary support;
(2) forming a cholesteric liquid crystalline phase by aligning the polymerizable liquid crystal compound and forming a layer formed by immobilizing a cholesteric liquid crystalline phase from the liquid crystal composition by immobilizing the alignment;
(3) peeling off the temporary support; and
(4) allowing a peeling surface which is obtained after the peeling to adhere to the antireflection layer.
